# EUROPEAN PATENT SPECIFICATION

(11) **EP 1 466 872 B1**
(45) Date of publication and mention of the grant of the patent: **23.07.2008**
(21) Application number: 02790803.7
(22) Date of filing: 18.12.2002
(51) Int. Cl.: C03B 33/027, B28D 1/24

(54) **HOLDER FOR TIP AND METHOD FOR MANUFACTURING THE SAME, AND SCRIBING DEVICE AND MANUAL CUTTER THAT ARE PROVIDED WITH THE HOLDER FOR TIP**
SPITZENHALTER UND HERSTELLUNGSVERFAHREN DAFÜR SOWIE RITZVORRICHTUNG UND HANDSCHNEIDER MIT DEM SPITZENHALTER
PORTE-POINTE ET PROCEDE DE FABRICATION, DISPOSITIF TRACEUR ET COUTEAU MANUEL POUR PORTE-POINTE

(30) Priority: 18.12.2001 JP 2001384231
(43) Date of publication of application: 13.10.2004
(73) Proprietor: Mitsuboshi Diamond Industrial Co., Ltd., Suita-city, Osaka 564-0044 (JP)
(72) Inventor: TOMIMORI, Hiroshi, Osaka 564-0044 (JP)
(74) Representative: Müller-Boré & Partner Patentanwälte
(86) International application number: PCT/JP2002/013234
(87) International publication number: WO 2003/051784

(56) References cited:
- FR-A- 2 118 422
- JP-A- 2001 058 841
- JP-A- 2001 246 616
- JP-U- 59 088 428
- PATENT ABSTRACTS OF JAPAN vol. 2000, no. 20, 10 July 2001 (2001-07-10) -& JP 2001 058841 A (HITACHI LTD), 6 March 2001 (2001-03-06)
- PATENT ABSTRACTS OF JAPAN vol. 2000, no. 26, 1 July 2002 (2002-07-01) -& JP 2001 246616 A (HITACHI LTD), 11 September 2001 (2001-09-11)
- PATENT ABSTRACTS OF JAPAN vol. 2002, no. 06, 4 June 2002 (2002-06-04) -& JP 2002 047022 A (SEIKO EPSON CORP), 12 February 2002 (2002-02-12)

## Description

### Technical Field

This invention relates to a tip holder according to the preamble of claim 1, and its fabrication method according to claim 9.

Such a tip holder is known from JP 2001-58841.

### Background Art

Document JP 2001 058841 A discloses a tip holder for holding a cutter tip having a conical shaft at both sides of a circular ridge line of a cutting edge thereof. The tip holder comprises two holders and two bearings for holding the cutter tip, provided at opposing sides of the two holders.

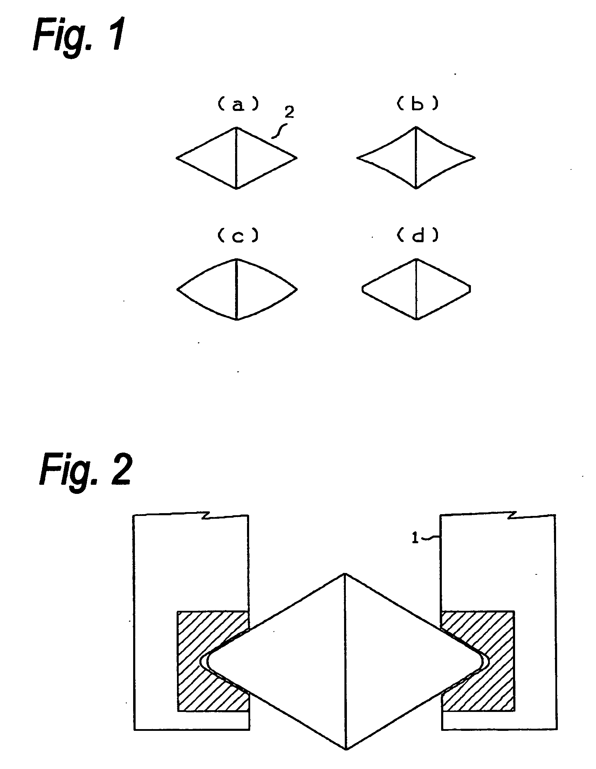

A tip holder, having a cutter tip at the lower end thereof, is employed to scribe a line on a surface of a plate made of a brittle material for separating the plate into pieces. Fig. 1 shows examples of prior art cutter tips 2 disclosed in Japanese Utility Model Publication 62-023779/1987. As shown in (a) in Fig. 1, the cutter tips 2 has a shape having two cones sharing a common base, and two peaks thereof are used as a shaft of the cutter tip 2. Further, as shown in (b), (c) and (d) in Fig. 1, the cutter tips 2 may have concave gradients, convex gradients and R-chamfered peaks. The cutter tip 2 may be made of sintered diamond. In the tip holder, friction of the tip against bearings used to support the tip becomes low, and the life for scribing of the tip is extended.

Recently, for liquid crystal panels and the like fabricated by using a scribing process, it is highly demanded to decrease the price of an end product, and it is requested to decrease the cost for scribing and to increase the efficiency of scribing further. As to a tip holder, it is needed to increase the life of tip holder for scribing.

### Disclosure of Invention

An object of the invention is to provide a tip holder having a higher scribing efficiency and a longer scribing life.

This object is solved by the tip holder according to claim 1 and the method according to claim 9. Preferred embodiments of the invention are subject-matter of the dependent claims.

Preferably, the curved side has a predetermined radius of curvature.

Preferably, the concave surface (hereinafter the bell-shaped concave) is not through to the holder.

Preferably, the concave surface is not through to the holder, and the radius of curvature is 0.1D to D wherein diameter of cutting edge of the cutter tip is represented as D.

Preferably, the concave surface is extended to the holder.

Preferably, the concave surface is extended to the holder, and the radius of curvature is D to 2D wherein diameter of cutting edge of the cutter chip is represented as D.

Preferably, the bearings are made of monocrystalline diamond.

Preferably, the bearings are made of sintered diamond.

Preferably, the concave surface which has the shape of a bell is fabricated with a YAG laser.

Preferably, the concave surface which has the shape of a bell is formed with electric discharging machining.

A scriber apparatus according to the invention includes a mechanism for moving a scribing head in X and/or Y direction relatively to a table on which a plate made of a brittle material is put. The scribing head provides one of the tip holders mentioned above.

A manual cutter according to the invention has a cylindrical grip, and a tip holder fixed to an end of the grip. The tip holder is one of the tip holders mentioned above.

An advantage of the invention is that the life of the cutter tip and the tip holder can be extended because the precision of rotation of the cutter tip is improved and the friction resistance at the bearings can be decreased by supplying solid lubricant according to the structure of the tip holder having tip holders with recesses to support a cutter tip of a shape of two cones sharing a common base, each of the recesses having a concave with a predetermined radius of curvature.

### Brief Description of Drawings

Fig. 1 is a plan view of prior art cutter tips to be held by a holder;
Fig. 2 is an enlarged, schematic view of a tip holder of the prior art in a region around a tip and a bearing therefor;
Fig. 3 is a diagram of a prior art wire-drawer around a dice thereof;
Fig. 4 is a diagram for a front view and a side view of a tip holder;
Fig. 5 is an enlarged, schematic view of a tip holder in a region around a tip and a bearing therefor according to a first embodiment;
Fig. 6 is an enlarged, schematic view of an example of a tip holder in a region around a tip and a bearing therefor according to a second embodiment;
Fig. 7 is an enlarged, schematic view of an example of a tip holder in a region around a tip and a bearing therefor according to a third embodiment;
Fig. 8 is a diagram on fabrication steps of a bearing for the tip holder according to the third embodiment;
Fig. 9 is a front view of a scribing apparatus with the tip holder according to the invention;
Fig. 10 is a side view of the scribing apparatus shown in Fig. 9; and
Fig. 11 is a partial sectional view of a manual cutter with a tip holder according to the invention.

### Best Mode for Carrying Out the Invention

Referring now to the drawings, wherein like reference characters designate like or corresponding parts throughout the several views, embodiments of the invention are explained below.

The inventors studied prior art tip holders in order to improve fabrication efficiency and for extending the life thereof for scribing. Fig. 2 shows an example of a prior art cutter tip 2 and bearings 3a of a holder 1 for the tip 2 in detail. The bearings 3a support the cutter tip 2 at two sides thereof. They are made of sintered diamond. A supporting section 3b to be in contact with the cutter tip 2 has a conical concave surface to abut along the contour of the cutter tip 2. Based on a test on the life of the cutting edge of the cutter tip 2, in order to extend the life of the cutting edge of a cutter tip 2, it is found more effective to decrease friction resistance between the cutter tip 2 and the supporting section 3b to improve the precision on the rotation of the cutter tip 2, rather than to prevent wear and tear of the cutting edge of the cutter tip 2. That is, it is desirable to improve the precision on the rotation of the cutter tip 2 to decrease the wear of the shaft of the cutter tip 2 and of the bearings 3a.

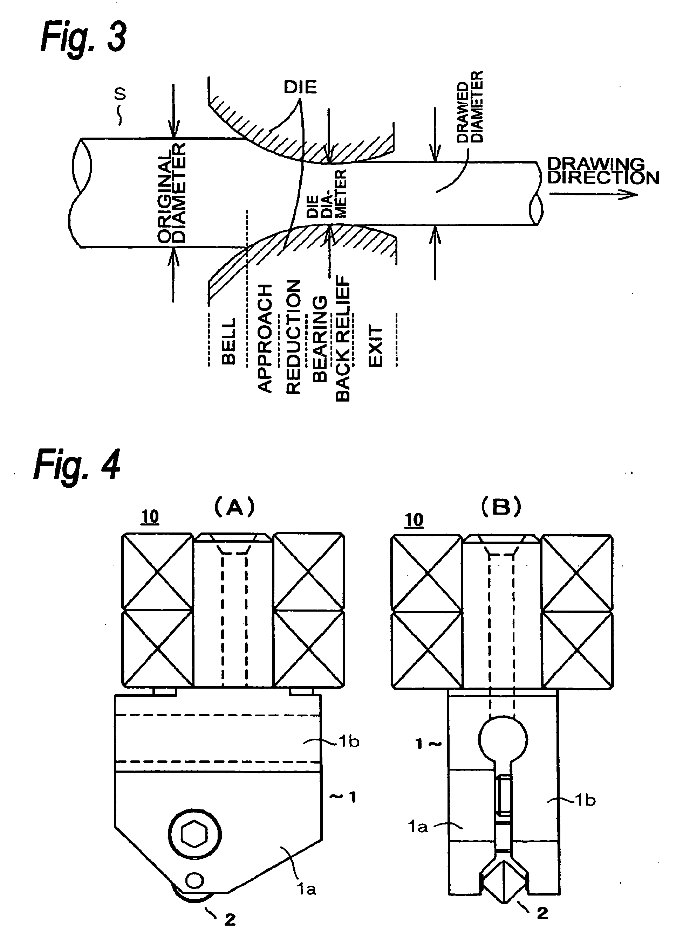

Fig. 3 shows a die of a withdrawing machine for drawing a wire S in order to decrease its diameter. The die has regions called as bell (entrance), approach, reduction, bearing, back relief and exit. It is made of diamond by taking the life thereof and the precision of drawing into account. The inner area of the die for drawing has a shape appropriate for the precision of the drawing, wear resistance and high strength, and its section has a gradual curve.

The inventors find that when the supporting section 3b of a tip holder has a bell shape curve as shown in Fig. 3 instead of the conical shape curve shown in Fig. 2, the resulting stable linear contact of the cutter tip 2 at the supporting section 3b improves centrality and rotation precision of the cutter tip. Thus, the life for scribing of the cutting edge becomes longer.

Fig. 4 shows a front view and a side view of a tip holder 1 for cutting a brittle material. At the lower portion of the tip holder, two holder members 1a and 1b are provided in parallel, and they support a tip 2 between them rotatably with bearings not shown. The tip holder 1 has an integral body including the holder members 1a and 1b, and a cutter tip 2 is fitted to the lower portion of the integral body to construct a tip holder 1. After binding the holder members 1a and 1b with a predetermined gap between them to hold the cutter tip 2 rotatably, the tip holder 1 can be used for a desired use.

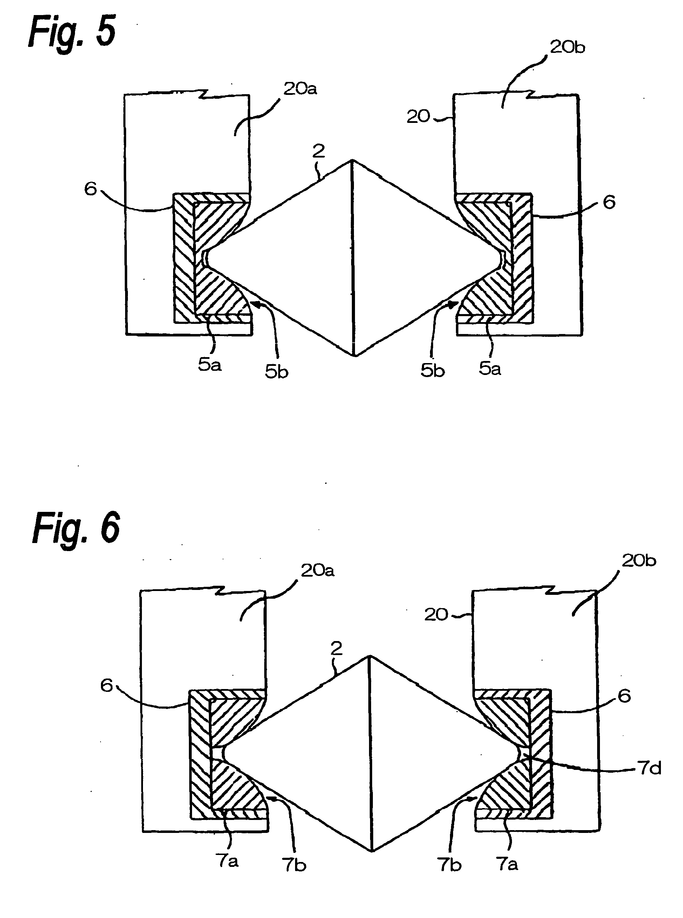

Fig. 5 shows a section of a tip holder 20 of a lower portion thereof. Bearing supports 6 are fixed, for example, with soldering into circular recess provided in planes of the first holder member 20a and the second one 20b facing to each other. The bearing supports 6 are made of, for example, Fe-Cu-Sn sintered metal, and it has been sintered with a bearing 5a made of monocrystalline diamond to have a cylindrical shape. The cutter tip 2 has a conical shaft at two sides of a circular ridge line of a cutting edge thereof. The supporting section 5b on the surface of the bearing 5a has a bell-like shape similar to the bell region shown in Fig. 3. For example, if the diameter of the circular ridge line of the cutting edge of the cutter tip 2 is 2 mm, the radius of curvature of the above-mentioned curve is about 0.2 to 2 mm. Further, if the radius of the cutting edge of the tip 2 is denoted as D in millimeter, the radius of curvature of the curve is selected in a range between 0.1D and D in millimeter.

The supporting section 5b forms a non-through recess, as shown in Fig. 5. That is, the recess of the supporting section 5b is not through to the bearing 5a. In this case, solid lubricant is supplied from the side of the cutter tip 2. The solid lubricant is, for example, tungsten disulfide or molybdenum disulfide having characteristics, for example, that it can be used in a wide temperature range and that it is hard to be vaporized. Fig. 6 shows a tip holder 20 in a lower portion according to a second embodiment of the invention. Similarly to the lower portion of the tip holder of the first embodiment, bearing supporters 6 and bearings 7a are fixed into circular recess provided in planes of a first holder member 20a and a second one 20b facing to each other. The supporting section 7b has a throughhole 7d, and it is closed by the bearing supporter 6.

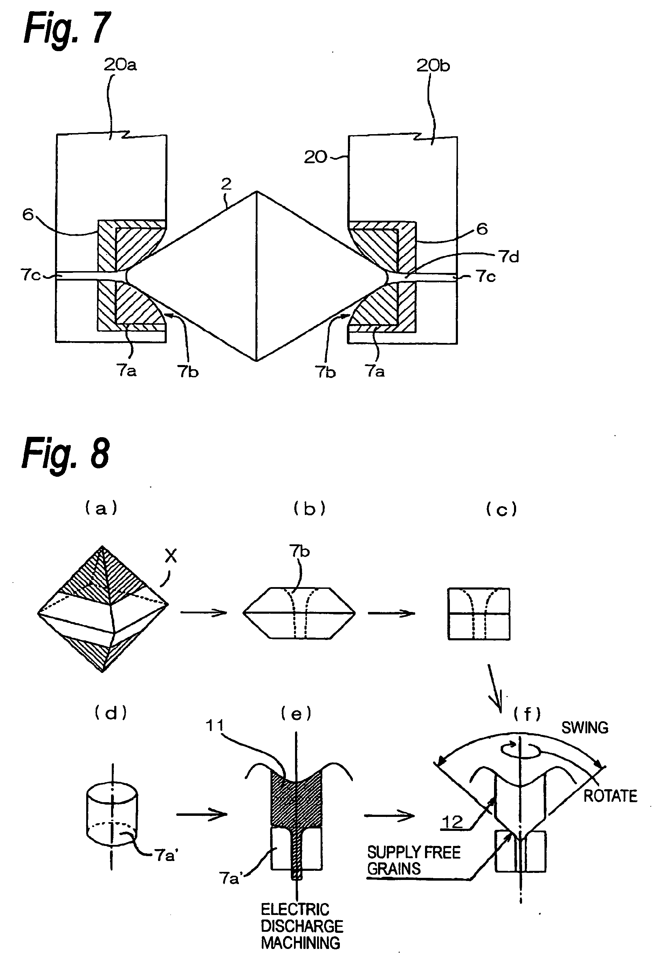

Fig. 7 shows a tip holder 20 in a lower portion according to a third embodiment of the invention. Similarly to the lower portion of the tip holder of the second embodiment, bearing supporters 6 and bearings 7a are fixed into circular recess provided in planes of a first holder member 20a and a second one 20b facing to each other. The supporting section 7b has a throughhole 7d, while a throughhole 7c is also formed through the bearing supporter 6 and the holder member 20a, 20b so as to align with the throughhole 7d. The throughholes 7c and 7d are used as an inlet to supply solid lubricant from the outside of the holder 20.

Further, in this case, the supporting section 7b has the circular ridge line of cutting edge with the radius of curvature of, for example, about 3 to 6 mm when the diameter of the cutting edge of the cutter tip 2 is 3 mm. Further, if the diameter of the cutting edge of the cutter tip 2 is denoted as D mm, the radius of curvature of the curve is selected in a range between D and 2D mm.

The tip holders according to the invention correspond to a structure wherein the two holder members 1a and 1b shown in Fig. 4 are replaced with the first and second holder members 20a and 20b according to one of the above-mentioned first to third embodiments.

Fig. 8 illustrates an embodiment of a fabrication process for a bearing 7a made of monocrystalline or sintered diamond. When the bearing 7a is made of monocrystalline diamond X, top and bottom parts of the diamond X, shown in (a) in Fig. 8A with hatching, is cut off with a skeif or the like, and a bell-shaped hole is formed at its center with a yttrium aluminum garnet (YAG) laser as a basis of the supporting section 7b ((b) in Fig. 8). Then the hole is rounded with a YAG laser to have a predetermined outer contour for the bearing 7a ((c) in Fig. 8). Then lapping is performed as shown in (f) in Fig. 8. In this step, while free grains (diamond grains of 2 to 4 µm) are supplied to the bearing supporter 7b, a needle 12 having the same tip angle as the bearing supporter 7b is rotated and swung further around the hole so as not to deform the bell shape.

When a bearing 7a made of sintered diamond is fabricated, diamond grains are first sintered to provide a cylindrical bearing 7a' having a predetermined outer diameter ((d) in Fig. 8). Next, the cylindrical bearing 7a' is subjected to electric discharge machining by using a discharge electrode 11 having a contour similar to the bell shape, and the bell shape is transferred to the cylindrical bearing 7a' ((e) in Fig. 8). Then, while grains (diamond grains of 2 to 4 µm) are supplied to the surface subjected to the electric discharge machining, a needle 12 having the same tip angle as the bearing support 7b is rotated and inclined around the hole so as not to break the bell shape ((f) in Fig. 8).

The bearing 7a may be made of a gem such as sapphire or ruby. The lapping is not limited to the above-mentioned process, and for example, wire lapping may be used.

In order to fabricate a tip holder according to the invention, bearings 5a, 7a having the above-mentioned bell-shaped recess are held by the bearing holders 6 and mounted to the first and second holder members 20a and 20b. Next the cutter tip 2 is combined with the first and second holder members 20a and 20b having the bearings 5a, 7a.

Scribing tests are performed on the tip holders with edge load of 1.0 kg, and the running distance (or life) thereof is determined as a result of the endurance test. As to prior art tip holders shown in Fig. 2, the running distance is 150,000 meters on the average, while it is extended largely to 300,000 meters on the average for the tip holders of the invention. Further, by supplying solid lubricant every 10,000 meters, the life of the cutting edge is extended further by about 20 to 30 %.

By using the bearing 5a, 7a impregnated with oil at the bearing supporter 5b, 7b, or so-called oiless bearing, for supporting the cutter tip 2, periodic refill for solid lubricant is not needed, and stable scribing performance can be kept. Alternatively, the bearing supporter 5b, 7b may be coated for improving the surface property and for hardening the surface (for example, defric coating) in order to extend the life of the bearings 5a, 7a.

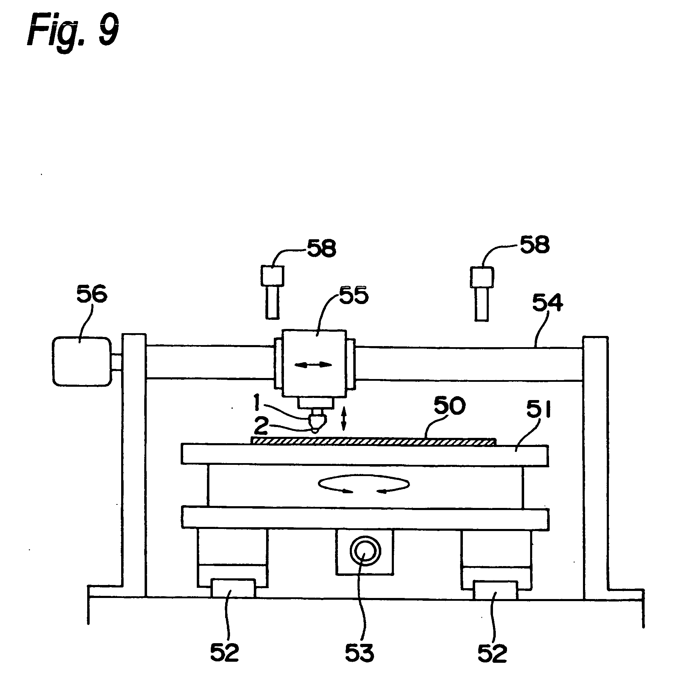

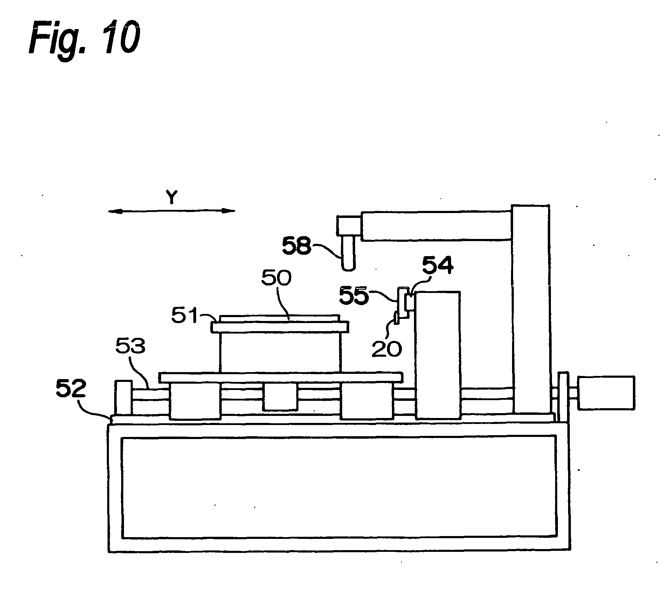

Next, a scribing apparatus is explained having the above-mentioned tip holder. Figs. 9 and 10 are a front view and a side view of the scribing apparatus. A plate 50 made of a brittle material put on a horizontal rotatable table 51 is fixed on the table 51 by absorbing the plate with a vacuum pump (not shown), and a pair of parallel guide rails 52 support the table 51 and can guide it in Y direction (perpendicularly to the sheet of paper in Fig. 9) along the rails 52 with a ball screw 53. A guide bar 54 is provided above the table 51 in X direction (left-and-right direction in Fig. 9). A scribing head 55 is mounted on the guide bar 54 so as to slide in X direction, and a motor 56 is provided to slide the scribing head 55. The above-mentioned tip holder 20 is attached below the scribing head 55 so as to rise and fall and to swing around an axis perpendicular to the plate 50, and the cutter tip 2 is mounted rotatably at the lower end thereof. A pair of charge-coupled-device (CCD) cameras 58 are arranged above the guide bar 54 to recognize alignment marks provided on the plate 50 put on the table 51. Further, a cutter tip inverter is included in the scribing head 55 for inverting the direction of the tip holder 20 by 180 degrees so as to invert the cutter tip by 180 degrees each time a scribing line is formed.

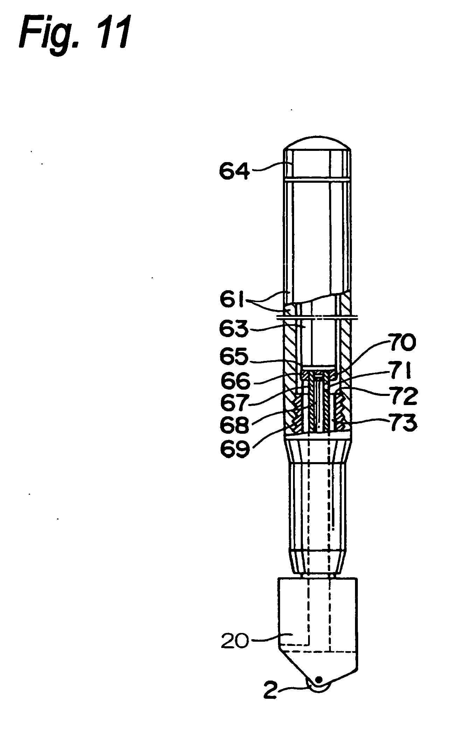

Fig. 11 shows a manual cutter having the above-mentioned tip holder. A cylindrical holder 61 for holding the manual cutter is the same as disclosed in Japanese Utility Model Publication 62-23780/1987 by the applicant, and the above-mentioned tip holder 20 is mounted on its bottom. The manual cutter can be used not only for a glass plate, but also for a plate made of a brittle material such as a ceramic or a semiconductor material. Further, the manual cutter includes an oil chamber 63, a cap 64 thereof and mechanisms 65-73 therefor, but they are not directly related to the invention, and explanation thereof is omitted here.

## Claims

1. A tip holder (20) for holding a cutter tip (2) having a conical shaft at both sides of a circular ridge line of a cutting edge thereof, comprising:
two holders (20a, 20b); and
two bearings (5a; 7a) for holding said cutter tip (2), provided at opposing sides of said two holders (20a, 20b); **characterized in that**
each of said two bearings (5a; 7a) has a concave surface (5b; 7b) which has the shape of a bell provided with a curved side for supporting a conical shaft of said cutter tip (2).

2. The tip holder (20) according to claim 1, wherein the curved side has a predetermined radius of curvature.

3. The tip holder (20) according to claim 1 or 2, wherein said concave surface (5b) is not through to said holder(20a, 20b).

4. The tip holder (20) according to claim 2, wherein said concave surface (5b) is not through to said holder, and the radius of curvature is 0.1D to D wherein the diameter of the cutting edge of said cutter tip (2) is represented as D.

5. The tip holder (20) according to claim 1 or 2, wherein said concave surface (7b) is extended to said holder (20a, 20b).

6. The tip holder(20) according to claim 2, wherein said concave surface (7b) is extended to said holder(20a, 20b), and the radius of curvature is D to 2D wherein the diameter of the cutting edge of said cutter tip (2) is represented as D.

7. The tip holder (20) according to one of claims 1 to 6, wherein said bearings (5a; 7a) are made of monocrystalline diamond.

8. The tip holder (20) according to one of claims 1 to 6, wherein said bearings (5a; 7a) are made of sintered diamond.

9. A method for producing a tip holder (20) for a cutter tip (2) having a conical shaft at both sides of a circular ridge line of a cutting edge thereof, comprising the steps of:
forming two bearings (5a; 7a) with a concave surface (5b; 7b) which has the shape of a bell provided with a curved side for supporting a conical shaft of said cutter tip (2);
mounting a bearing holder (6) holding the bearing (5a; 7a) into each of first and second holder members (20a, 20b); and
combining a cutter tip (2) with the first and second holder members (20a, 20b) having the bearings (5a; 7a).

10. The method according to claim 9, wherein said bearing (5a; 7a) is made of monocrystalline diamond.

11. The method according to claim 10, wherein said concave surface (5b; 7b) with the shape of a bell is fabricated with a YAG laser.

12. The method according to claim 9, wherein said bearing (5a; 7a) is made of sintered diamond.

13. The method according to claim 12, wherein a bell-shaped recess is formed with electric discharging machining.

14. A scriber apparatus comprising a mechanism for moving a scribing head (55) in X and/or Y direction relatively to a table (51) on which a plate(50) made of a brittle material is put, wherein said scribing head (55) comprises a tip holder (20) according to one of claims 1 to 8.

15. A manual cutter comprising:
a cylindrical grip; and a tip holder (20) fixed to an end of said grip, wherein said tip holder (20) is one of the tip holders (20) according to one of claims 1 to 8.

## Patentansprüche

1. Spitzenhalter (20) zum Halten einer Schneidspitze (2) mit einer konischen Welle bzw. Schaft an beiden Seiten einer kreisförmigen Rand- bzw. Kantenlinie einer Schneidkante davon, umfassend:
zwei Halter (20a, 20b); und
zwei Lager (5a; 7a) zum Halten der Schneidspitze (2), die an gegenüberliegenden Seiten der beiden Halter (20a, 20b) vorgesehen sind; **dadurch gekennzeichnet, dass**
jedes der beiden Lager (5a; 7a) eine konkave Oberfläche bzw. Fläche (5b; 7b) aufweist, welche die Form einer Glocke aufweist, die mit einer gekrümmten Seite zum Tragen bzw. Stützen einer konischen Welle der Schneidspitze (2) versehen ist.

2. Spitzenhalter (20) nach Anspruch 1, wobei die gekrümmte Seite einen vorbestimmten Krümmungsradius aufweist.

3. Spitzenhalter (20) nach Anspruch 1 oder 2, wobei die konkave Fläche (5b) nicht durchgehend zu dem Halter (20a, 20b) ist.

4. Spitzenhalter (20) nach Anspruch 2, wobei die konkave Fläche (5b) nicht durchgehend zu dem Halter ist und der Krümmungsradius 0,1 D bis D ist, wobei der Durchmesser der Schneidkante der Schneidspitze (2) als D dargestellt ist.

5. Spitzenhalter (20) nach Anspruch 1 oder 2, wobei die konkave Fläche (7b) zu dem Halter (20a, 20b) erstreckt ist.

6. Spitzenhalter (20) nach Anspruch 2, wobei die konkave Fläche (7b) zu dem Halter (20a, 20b) erstreckt ist und der Krümmungsradius D bis 2D ist, wobei der Radius der Schneidkante der Schneidspitze (2) als D dargestellt ist.

7. Spitzenhalter (20) nach einem der Ansprüche 1 bis 6, wobei die Lager (5a; 7a) aus monokristallinem Diamant bestehen.

8. Spitzenhalter (20) nach einem der Ansprüche 1 bis 6, wobei die Lager (5a; 7a) aus Sinterdiamant bestehen.

9. Verfahren zum Herstellen eines Spitzenhalters (20) für eine Schneidspitze (2) mit einer konischen Welle bzw. Schaft an beiden Seiten einer kreisförmigen Rand- bzw. Kantenlinie einer Schneidkante davon, umfassend die Schritte:
Ausbilden zweier Lager (5a; 7a) mit einer konkaven Oberfläche bzw. Fläche (5b; 7b), welche die Form einer Glocke aufweist, die mit einer gekrümmten Seite zum Tragen bzw. Stützen einer konischen Welle bzw. Schaft der Schneidspitze (2) versehen ist;
Montieren eines die Lager (5a; 7a) haltenden Lagerhalters (6) in jedem eines ersten und zweiten Halteglieds (20a, 20b); und
Verbinden einer Schneidspitze (2) mit dem die Lager (5a; 7a) aufweisenden ersten und zweiten Halteglied (20a, 20b).

10. Verfahren nach Anspruch 9, wobei das Lager (5a; 7a) aus monokristallinem Diamant besteht.

11. Verfahren nach Anspruch 10, wobei die konkave Fläche (5b; 7b) mit der Form einer Glocke mit einem YAG-Laser hergestellt wird.

12. Verfahren nach Anspruch 9, wobei das Lager (5a; 7a) aus Sinterdiamant besteht.

13. Verfahren nach Anspruch 12, wobei eine glockenförmige Aussparung durch Elektroerosivbearbeitung gebildet wird.

14. Ritzvorrichtung umfassend einen Mechanismus zum Bewegen eines Ritzkopfs (55) in X- und/oder Y-Richtung relativ zu einem Tisch (51), auf dem eine Platte (50) aus einem brüchigen bzw. spröden Material plaziert ist, wobei der Ritzkopf (55) einen Spitzenhalter (20) nach einem der Ansprüche 1 bis 8 umfasst.

15. Handschneider umfassend:
einen zylindrischen Griff; und einen Spitzenhalter (20), der an einem Ende des Griffs befestigt ist, wobei der Spitzenhalter (20) einer der Spitzenhalter (20) nach einem der Ansprüche 1 bis 8 ist.

## Revendications

1. Porte-pointe (20) destiné à supporter une pointe de coupe (2) possédant une tige conique au niveau de deux côtés d'une ligne de strie circulaire d'une arête de coupe de celle-ci, comprenant :
deux organes de maintien (20a, 20b) ; et
deux paliers (5a ; 7a) pour retenir ladite pointe de coupe (2), prévus au niveau de côtés opposés desdits deux organes de maintien (20a, 20b) ; **caractérisé en ce que**
chacun desdits deux paliers (5a ; 7a) possède une surface concave (5b ; 7b) qui possède la forme d'une cloche pourvue d'un côté courbé pour supporter une tige conique de ladite pointe de coupe (2).

2. Porte-pointe (20) selon la revendication 1, dans lequel le côté courbé possède un rayon prédéterminé de courbure.

3. Porte-pointe (20) selon la revendication 1 ou 2, dans lequel ladite surface concave (5b) n'est pas étendue jusqu'audit organe de maintien (20a, 20b).

4. Porte-pointe (20) selon la revendication 2, dans lequel ladite surface concave (5b) n'est pas étendue jusqu'audit organe de maintien, et le rayon de courbure est 0,1 D à D dans lequel D représente le diamètre de l'arête de coupe de ladite pointe de coupe (2).

5. Porte-pointe (20) selon la revendication 1 ou 2, dans lequel ladite surface concave (7b) est étendue jusqu'audit organe de maintien (20a, 20b).

6. Porte-pointe (20) selon la revendication 2, dans lequel ladite surface concave (7b) est étendue jusqu'audit organe de maintien (20a, 20b), et le rayon de courbure est D à 2 D, dans lequel D représente le diamètre de l'arête de coupe de ladite pointe de coupe (2).

7. Porte-pointe (20) selon l'une des revendications 1 à 6, dans lequel lesdits paliers (5a ; 7a) sont faits de diamant monocristallin.

8. Porte-pointe (20) selon l'une des revendications 1 à 6, dans lequel lesdits paliers (5a ; 7a) sont faits de diamant fritté.

9. Procédé de fabrication d'un porte-pointe (20) pour une pointe de coupe (2) possédant une tige conique au niveau de deux côtés d'une ligne de strie circulaire d'une arête de coupe de celle-ci, comprenant les étapes consistant à :
former deux paliers (5a ; 7a) avec une surface concave (5b ; 7b) qui possède la forme d'une cloche pourvue d'un côté courbé pour supporter une tige conique de ladite pointe de coupe (2) ;
monter un support de palier (6) retenant le palier (5a ; 7a) dans chacun parmi des premier et second éléments d'organe de maintien (20a, 20b) ; et
associer une pointe de coupe (2) aux premier et second éléments d'organe de maintien (20a, 20b) possédant les paliers (5a ; 7a).

10. Procédé selon la revendication 9, dans lequel ledit palier (5a ; 7a) est fait de diamant monocristallin.

11. Procédé selon la revendication 10, dans lequel ladite surface concave (5b ; 7b) avec la forme d'une cloche est fabriquée avec un laser au grenat d'yttrium et d'aluminium (YAG).

12. Procédé selon la revendication 9, dans lequel ledit palier (5a ; 7a) est fait de diamant fritté.

13. Procédé selon la revendication 12, dans lequel un évidement en forme de cloche est formé par usinage par électroérosion.

14. Appareil traceur comprenant un mécanisme pour déplacer une pointe de traçage (55) dans une direction X et/ou Y par rapport à une table (51) sur laquelle est placée une plaque (50) faite d'un matériau cassant, dans lequel ladite pointe de traçage (55) comprend un porte-pointe (20) selon l'une des revendications 1 à 8.

15. Dispositif de coupe manuel comprenant :
une poignée cylindrique ; et un porte-pointe (20) fixé à une extrémité de ladite poignée, dans lequel ledit porte-pointe (20) est un des porte-pointes (20) selon l'une des revendications 1 à 8.
